# EUROPÄISCHE PATENTSCHRIFT

(11) **EP 3 970 580 B1**
(45) Veröffentlichungstag und Bekanntmachung des Hinweises auf die Patenterteilung: **26.03.2025**
(21) Anmeldenummer: 21192569.8
(22) Anmeldetag: 23.08.2021
(51) Int. Cl.: A47J 36/16, A47J 27/18

(54) **KOCHKESSEL FÜR EIN KOCHAGGREGAT, ZUGEHÖRIGES KOCHAGGREGAT SOWIE VERFAHREN ZUM BETRIEB EINES SOLCHEN**
COOKING POT FOR A COOKING UNIT, ASSOCIATED COOKING UNIT AND METHOD FOR OPERATING SAME
MARMITE POUR MODULE DE CUISSON, MODULE DE CUISSON ASSOCIÉE, AINSI QUE PROCÉDÉ DE FONCTIONNEMENT D'UN TEL MODULE

(30) Priorität: 03.09.2020 DE 102020123025
(43) Veröffentlichungstag der Anmeldung: 23.03.2022
(73) Patentinhaber: Berief, Theodor, 59329 Wadersloh (DE)
(72) Erfinder: Berief, Theodor, 59329 Wadersloh (DE)
(74) Vertreter: Pellengahr, Maximilian Rudolf

(56) Entgegenhaltungen:
- CN-A- 107 928 398
- CN-A- 110 840 220
- CN-B- 107 397 428
- US-A1- 2014 299 159

## Beschreibung

Die vorliegende Erfindung betrifft einen Kochkessel für ein Kochaggregat zur Verarbeitung von Nahrungsmitteln gemäß dem Oberbegriff von Anspruch 1. Ferner betrifft die vorliegende Anmeldung ein Kochaggregat zur Verarbeitung von Nahrungsmitteln gemäß Anspruch 11. Schließlich betrifft die vorliegende Anmeldung ein Verfahren zum Betrieb eines Kochaggregats gemäß dem Oberbegriff von Anspruch 12.

Der Kochkessel umfasst ein Gehäuse, das eine zylindrische Grundform aufweist. Das Gehäuse begrenzt einen Innenraum, in den Nahrungsmittel einladbar und darin verarbeitbar sind. Hierzu umfasst der Kochkessel insbesondere eine Heizeinrichtung, mittels dessen ein Mantel des Gehäuses erwärmbar ist. Auf diese Weise können in dem Gehäuse befindliche Nahrungsmittel erhitzt, insbesondere gekocht oder gebraten, werden. Weiterhin umfasst Kochkessel eine innerhalb des Innenraums angeordnete Rühreinrichtung, mittels der in dem Innenraum befindliche Nahrungsmittel rührbar sind. Die Rühreinrichtung kann insbesondere eine sich parallel zu einer Mittelachse des Gehäuses erstreckende Rührwelle mit sich radial ausgehend von der Rührwelle erstreckenden Rührelementen aufweisen. Schließlich umfasst der Kochkessel ferner eine Frischwasserzufuhr, mittels der Frischwasser in den Innenraum einbringbar ist. Die Frischwasserzufuhr dient insbesondere zur Zuführung von Prozesswasser, das zur Verarbeitung jeweiliger Nahrungsmittel hinzugegeben wird.

Das Gehäuse ist derart horizontal orientiert, dass eine Mittelachse desselben horizontal im Raum ausgerichtet ist. Zwecks Einladung sowie Ausladung von Nahrungsmitteln in den Innenraum hinein bzw. aus dem Innenraum heraus verfügt das Gehäuse über mindestens eine Öffnung. Diese kann insbesondere mittels eines Deckels des Kochkessels zusammenwirken, mittels dessen die Öffnung wahlweise verschließbar ist. Um Nahrungsmittel, insbesondere nach ihrer Verarbeitung, aus dem Innenraum des Gehäuses auszuladen, ist das Gehäuse als Ganzes um eine Schwenkachse verschwenkbar, die parallel zu der Mittelachse des Gehäuses orientiert ist. Mittels Verschwenkung des Gehäuses um diese Schwenkachse ist das Gehäuse zwischen einer Arbeitsstellung und einer Entladestellung überführbar. Bei Vorliegen in der Arbeitsstellung ist ein Öffnungsquerschnitt der Öffnung oberhalb der Mittelachse des Gehäuses angeordnet, während sich der Öffnungsquerschnitt zumindest teilweise unterhalb der Mittelachse befindet, wenn das Gehäuse in seiner Entladestellung vorliegt. Derartig horizontal orientierte, um eine Schwenkachse verschwenkbar Kochkessel werden auch als sogenannte "Kippkochkessel" bezeichnet.

Ein beschriebener Kochkessel ist typischerweise in ein übergeordnetes Kochaggregat eingebunden. Dieses verfügt zusätzlich zu dem Kochkessel als solchem über mindestens eine Antriebseinrichtung, mittels der der Kochkessel um seine Schwenkachse verschwenkbar ist. Ferner verfügt das Kochaggregat über eine Steuerung, mittels der ein Verarbeitungsvorgang von Nahrungsmitteln zumindest teilautomatisiert betreibbar ist. Insbesondere kann das Kochaggregat ein Heizaggregat aufweisen, das mit dem Kochkessel zusammenwirkt, sodass insbesondere ein Mantel des Gehäuses erwärmbar und auf diese Weise thermische Energie auf in dem Innenraum des Gehäuses befindliche Nahrungsmittel übertragbar ist. Die Beheizung des Kochkessels kann beispielsweise mittels Hochdruckdampf oder einem Wärmeträgeröl erfolgen, das in einem Mantelhohlraum des Kochkessels zirkuliert wird. Auf diese Weise können in dem Kochkessel befindliche Nahrungsmittel beispielsweise gekocht oder gebraten werden.

Zum Betrieb eines derartigen Kochaggregats werden zunächst zu verarbeitende Nahrungsmittel in den Innenraum des Gehäuses des Kochkessels geladen. Zwecks Verarbeitung der Nahrungsmittel kann eine vorbestimmte Menge Frischwasser in den Innenraum zugeführt werden, wobei die genannte Frischwasserzufuhr zum Einsatz kommt. Wahlweise kann eine Temperierung der Nahrungsmittel erfolgen, wobei insbesondere eine Temperierung eines Mantels des Gehäuses des Kochkessels erfolgen kann, insbesondere eine Erhitzung desselben. Ferner kann die Verarbeitung ein Rühren der Nahrungsmittel mittels einer vorstehend beschriebenen Rühreinrichtung vorsehen, wobei das Rühren sowohl ein reines Umwirken als auch wahlweise ein Zerkleinern oder Pürieren der Nahrungsmittel betreffen kann. Nach der Verarbeitung der Nahrungsmittel werden selbige aus dem Innenraum des Gehäuses ausgeladen, wobei der Kochkessel mittels einer Antriebseinrichtung des Kochaggregats um die Schwenkachse verschwenkt wird. Dies erfolgt zumindest so weit, bis sich ein Öffnungsquerschnitt einer Öffnung des Gehäuses zumindest teilweise vertikal unterhalb einer Mittelachse des Gehäuses befindet. Dies führt in aller Regel dazu, dass die Nahrungsmittel, die insbesondere schütt- oder fließfähig sein können, bereits aufgrund der wirkenden Schwerkraft durch die Öffnung hindurch zumindest teilweise aus dem Innenraum austreten. Hierbei kann es vorgesehen sein, an der Öffnung des Gehäuses eine Schüttrutsche anzuordnen, mittels der die auszuladenden Nahrungsmittel gezielt in ein Behältnis, beispielsweise einen Rollcontainer, überführt werden können. Nach der vollständigen Entladung der Nahrungsmittel aus dem Gehäuse wird schließlich der Innenraum des Gehäuses von etwaigen Nahrungsmittelresten gereinigt.

### Stand der Technik

Kochkessel, Kochaggregate sowie Verfahren der vorstehend beschriebenen Art sind im Stand der Technik bereits bekannt. Hierzu wird insbesondere auf die im Markt befindlichen Kochaggregate der Berief Nahrungsmittelmaschinen GmbH und Co. KG hingewiesen, insbesondere das Modell "KIPPKO".

Bei den bekannten Kochkesseln hat es sich als problematisch herausgestellt, dass die Reinigung von Nahrungsmittelresten nach Abschluss der eigentlichen Nahrungsmittelverarbeitung vergleichsweise aufwendig ist. Besagte Reinigung erfolgt typischerweise mittels eines Hochdruckreinigers, dessen Spritzpistole von einem Bediener des Kochaggregats gezielt geführt und auf den Innenraum sowie insbesondere die darin befindliche Rühreinrichtung gerichtet wird. Um auf diese Weise abgelöste Nahrungsmittelreste, die sich in dem Innenraum des Kochkessels zunächst sammeln, auszuspülen, kann der Kochkessel weiter nach unten geschwenkt werden, sodass sich der Öffnungsquerschnitt der Öffnung gegenüber der Mittelachse des Gehäuses weiter absenkt. Zur Unterstützung eines letztendlichen Ausspülens aller in dem Innenraum des Gehäuses verbliebenen Nahrungsmittelreste wird in der Praxis schließlich typischerweise noch die Frischwasserzufuhr aktiviert und das zugeleitete Frischwasser als Spülwasser verwendet. Das auf diese Weise dem Innenraum zugeführte Frischwasser erfasst die verbliebenen Nahrungsmittelreste und trägt diese aus dem Gehäuse heraus, sodass letzteres schließlich gesäubert ist.

Diese Art der Reinigung eines jeweiligen Kochkessels hat sich zum einen als arbeits- und daher zeitintensiv erwiesen. Zum anderen ist aufgrund der typischen Verwendung der Frischwasserzufuhr in der beschriebenen Weise ein erhöhter Wasserverbrauch von Frischwasser in Funktion als Spülwasser am Ende des Reinigungsvorgangs zu beklagen. Da die Aufbereitung von Wasser aufwendig ist, sollte der Verbrauch von Frischwasser jedoch so gering wie möglich gehalten werden.

Ein Kochsessel, der die Merkmale des Oberbegriffs des Anspruchs 1 beschreibt,ist aus CN107928398A bekannt.

### Aufgabe

Der vorliegenden Anmeldung liegt mithin die Aufgabe zugrunde, einen Kochkessel bereitzustellen, der gegenüber dem Stand der Technik effizienter gereinigt werden kann.

### Lösung

Die zugrunde liegende Aufgabe wird erfindungsgemäß mittels eines Kochkessels mit den Merkmalen des Anspruchs 1 gelöst. Vorteilhafte Ausgestaltungen ergeben sich aus den zugehörigen Unteransprüchen.

Der erfindungsgemäße Kochkessel ist dadurch gekennzeichnet, dass das Gehäuse einen von seiner zylindrischen Grundform abweichenden, radial bezogen auf die Mittelachse des Gehäuses nach außen ausgeformten Arbeitsraum aufweist, der den Innenraum des Gehäuses erweitert. Der Arbeitsraum ist demzufolge bei dem erfindungsgemäßen Kochkessel ein Teil des Innenraums, dessen Volumen gegenüber einem im Übrigen gleich aufgebauten Gehäuse, das den genannten Arbeitsraum nicht aufweist, vergrößert ist. Dabei ist der Arbeitsraum derart an dem Gehäuse ausgebildet, dass er - bei Vorliegen des Gehäuses in seiner Arbeitsstellung betrachtet - einem oberen Endbereich des Innenraums zugeordnet ist. Dies hat zur Folge, dass der Arbeitsraum zumindest während eines Betriebs des Kochkessels, in dem sich das Gehäuse in seiner Arbeitsstellung befindet und der Innenraum mit Nahrungsmitteln gefüllt ist, oberhalb eines maximalen Produktspiegels der Nahrungsmittel liegt. Vorteilhafterweise liegt der Arbeitsraum zudem oberhalb des Öffnungsquerschnitts der Öffnung des Gehäuses und stellt mithin die "höchste Stelle" des Innenraums dar. Die beschriebene Anordnung des Arbeitsraums hat zur Folge, dass sich der Arbeitsraum während eines Betriebs des Kochaggregats in einen "Trockenbereich" des Gehäuses befindet, in dem planmäßig keine Nahrungsmittel anfallen.

Weiterhin umfasst der erfindungsgemäße Kochkessel mindestens eine Spüleinrichtung, die über mindestens eine Spüldüse verfügt, die zumindest teilweise innerhalb des Arbeitsraums angeordnet ist. Vorteilhafterweise ist die Spüldüse vollständig innerhalb des Arbeitsraums angeordnet. Die Spüldüse ist dazu hergerichtet, Spülwasser zumindest auf Teile der Rühreinrichtung, vorzugsweise auf die gesamte Rühreinrichtung, sowie zumindest auf Teile einer inneren Mantelfläche des Gehäuses, vorzugsweise auf die gesamte innere Mantelfläche, aufzuspritzen. Hierbei kann es besonders vorteilhaft sein, die Spüldüse derart auszubilden, dass diese einen Spülwasserstrahl mit sich fortwährend ändernder Richtung erzeugt, sodass die Rühreinrichtung und die Mantelfläche des Gehäuses sukzessive von dem Spülwasserstrahl getroffen und auf diese Art und Weise gereinigt werden. Die mindestens eine Spüldüse kann vorteilhafterweise über einen Drosselquerschnitt verfügen, durch den hindurch das Spülwasser aus der Spüldüse austritt, sodass mittels der Spüldüse ein Druckstrahl erzeugbar ist, der eine nicht vernachlässigbare mechanische Reinigungswirkung auf die getroffenen Stellen ausübt.

Der erfindungsgemäße Kochkessel hat viele Vorteile. Insbesondere weist er eine dezidierte Spüleinrichtung auf, die den Prozess der Reinigung des Kochkessels von Lebensmittelresten vereinfacht, wobei insbesondere ein Auftrag von Spülwasser unmittelbar aus dem Inneren des Gehäuses erfolgen kann. Dies ist insoweit von Vorteil, als es im Vergleich zum Stand der Technik einfacher ist, die Rühreinrichtung sowie die innere Mantelfläche des Gehäuses des Kochkessels vollständig mit einem Spülwasserstrahl unmittelbar zu erreichen. Demgegenüber ist das aus dem Stand der Technik bekannte Reinigen des Kochkessels mittels eines von außerhalb des Innenraums in den Innenraum hinein gerichteten Spülwasserstrahls schwieriger, da es aufgrund der Geometrie des Gehäuses sowie der darin befindlichen Rühreinrichtung in gewissem Umfang zu einer "Verschattung" von einzelnen Bereichen kommt, die mittels eines Eingriffs von außen nicht ohne Weiteres erreichbar sind. Die Reinigungsleistung mittels der Verwendung mindestens einer innerhalb des Innenraums angeordneten Spüldüse ist demzufolge verbessert.

Weiterhin bietet die Erfindung den besonderen Vorteil, dass ein Wasserverbrauch zur Reinigung des Kochkessels gegenüber dem Stand der Technik sinkt. Dies liegt darin begründet, dass die Spüleinrichtung mitsamt der mindestens einen Spüldüse, vorzugsweise einer Mehrzahl von Spüldüsen, dezidiert zum Zweck der Reinigung des Kochkessels ausgebildet sein kann, was insbesondere die Ausgestaltung der Spüldüsen betrifft. Im Vergleich dazu ist der Eintrag von Frischwasser in den Innenraum des Gehäuses mittels der Frischwasserzufuhr, die konzeptionell zur Bereitstellung von Prozesswasser für die Verarbeitung jeweiliger Nahrungsmittel vorgesehen ist, in jedem Falle weniger effizient, da die Art und Weise des Wassereintrags nicht im Sinne einer Reinigungsfunktion stattfindet. Dies betrifft insbesondere einen Wasserdruck, mit dem etwaiges Wasser auf betroffene Oberflächen der Rühreinrichtung sowie der Mantelfläche des Gehäuses aufgebracht wird, sowie Aufprallstellen des Wassers. Über eine Frischwasserzufuhr eingebrachtes Wasser weist mithin gegenüber einem mittels mindestens einer Spüldüse eingebrachten Spülwasserstrahl eine geringere Reinigungsleistung auf, sodass im Stand der Technik der Bedarf an zuzuführendem Frischwasser während der Reinigung des Kochkessels größer ist als unter Verwendung der Spüleinrichtung des erfindungsgemäßen Kochkessels.

Auch hat die Spüleinrichtung den Vorteil, dass die Spülung grundsätzlich unabhängig von der Frischwasserzufuhr vorgenommen werden kann. Dies ermöglicht beispielsweise die Beimischung mindestens eines Additivs zu dem Spülwasser mittels einer Mischeinrichtung und/oder die Erhöhung eines Drucks des Spülwassers mittels einer Druckerhöhungsanlage.

Schließlich bietet der erfindungsgemäße Kochkessel weiterhin den Vorteil, dass die Reinigung des Kochkessels automatisiert betrieben werden kann. Hierzu ist es insbesondere denkbar, die Spüleinrichtung mittels einer Steuerung des zugehörigen Kochaggregats anzusteuern, sodass mittels der Aktivierung eines Reinigungsprogramms beispielsweise zeitlich gesteuert Spülwasser über die Spüleinrichtung in den Innenraum des Gehäuses gespritzt werden kann. Bei einem solchen Betrieb entfällt die im Stand der Technik übliche händische Arbeit, der es ansonsten zur Reinigung des Kochkessels bedarf.

Die Anordnung der mindestens einen Spüldüse zumindest teilweise, vorzugsweise vollständig, innerhalb des Arbeitsraums bietet den Vorteil, dass die Spüldüse während eines Betriebs des Kochkessels, d.h. während der Verarbeitung jeweiliger Nahrungsmittel, sich oberhalb des Produktspiegels der Nahrungsmittel befindet. Dies hilft, eine Verschmutzung bis hin zu einer Verstopfung der Spüldüse zu vermeiden, die ansonsten in Gegenwart jeweiliger Nahrungsmittel auftreten könnte. Weiterhin ist die Anordnung der Spüldüse in dem Arbeitsraum zu bevorzugen, um ein Kollisionsrisiko der Spüldüse mit zumindest einem Teil, insbesondere einem Rührelement, der Rühreinrichtung während eines Betriebs des Kochkessels zu vermeiden. Entsprechend ist es von besonderem Vorteil, wenn der Arbeitsraum außerhalb eines Wirkungsbereichs der Rühreinrichtung ausgebildet ist.

In einer vorteilhaften Ausgestaltung des erfindungsgemäßen Kochkessels erstreckt sich der Arbeitsraum parallel zu der Mittelachse des Gehäuses. Vorzugsweise erstreckt sich der Arbeitsraum über eine Gesamtlänge des Gehäuses. Dies hat den Vorteil, dass etwaige Spüldüsen der Spüleinrichtung ebenfalls verteilt zumindest über einen längeren Abschnitt, vorzugsweise über die gesamte Länge, des Gehäuses in dem Arbeitsraum - und mithin in dem Innenraum des Gehäuses - angeordnet werden können.

Sofern sich der Arbeitsraum parallel zu der Mittelachse des Gehäuses erstreckt, kann es weiterhin vorteilhaft sein, wenn die Spüleinrichtung mindestens eine langgestreckte Spüllanze umfasst, die sich entlang des Arbeitsraums erstreckt. Die Spüllanze dient dazu, das Spülwasser über zumindest einen Längenabschnitt des Gehäuses, vorzugsweise über dessen gesamte Länge, zu verschiedenen Spüldüsen zu verteilen. Hierbei ist es von Vorteil, wenn ein Leitungsquerschnitt der Spüllanze die Düsenquerschnitte der mit der Spüllanze in Wirkverbindung stehenden Spüldüsen übersteigt, sodass die Spüldüsen ungeachtet ihrer Anordnung entlang der Spüllanze gleichmäßig mit Spülwasser versorgt werden können.

Den erfindungsgemäßen Kochkessel weiter ausgestaltend weist die Spüleinrichtung eine Mehrzahl von Spüldüsen auf, die vorzugsweise gleichmäßig über eine Länge des Gehäuses verteilt angeordnet sind. Eine derartige Ausgestaltung ist unter Verwendung einer vorstehend beschriebenen Spüllanze besonders einfach umsetzbar. Die Vorteile einer gleichmäßig verteilten Anordnung mehrerer Spüldüsen in dem Gehäuse sind vorstehend bereits dargelegt und sind insbesondere darin zu sehen, dass mehrere Spülwasserstrahlen erzeugt werden können, die gemeinsam die Reinigung der Rühreinrichtung sowie der inneren Mantelfläche des Gehäuses bewerkstelligen können.

Um einen jeweiligen Spülwasserstrahl auf möglichst viele verschiedene Stellen der Rühreinrichtung sowie der Mantelfläche des Gehäuses zu richten, kann es besonders vorteilhaft sein, wenn mindestens eine Spüldüse, vorzugsweise sämtliche Spüldüsen, von einer Rotationsdüse gebildet ist bzw. sind. Eine Rotationsdüse ist dazu geeignet, einen Spülwasserstrahl in fortwährend wechselnde Richtungen abzugeben. Hierzu ist es beispielsweise denkbar, dass eine Rotationsdüse einen kugelförmigen, frei drehbar gelagerten Düsenkopf aufweist, der sich infolge eines anstehenden Wasserdrucks während eines Betriebs der Spüleinrichtung fortwährend zufällig oder gerichtet bewegt, sodass der durch die Spüldüse austretende Spülwasserstrahl in verschiedenste Richtungen in den Innenraum des Gehäuses abgegeben wird.

In einer weiterhin vorteilhaften Ausgestaltung des erfindungsgemäßen Kochkessels umfasst dessen Gehäuse eine von einer zylindrischen Grundform radial nach außen abweichende, mit der Öffnung des Gehäuses zusammenwirkende Schüttrutsche. Diese kann insbesondere trichterförmig ausgebildet sein, sodass Nahrungsmittel, die durch die Öffnung hindurch im Zuge einer Entladung des Kochkessels austreten, mittels der Schüttrutsche gerichtet aus dem Innenraum ausgebracht werden können, beispielsweise in einen Rollcontainer. Die Verwendung einer derartigen Schüttrutsche ist dann von besonderem Vorteil, wenn sich die Öffnung des Gehäuses zumindest im Wesentlichen, vorzugsweise vollständig, über eine gesamte, parallel zu der Mittelachse des Gehäuses gemessene Länge des Gehäuses erstreckt. Eine solche Ausgestaltung der Öffnung vermeidet das Auftreten von Totwassergebieten im Zuge der Entladung des Gehäuses, verlangt jedoch in aller Regel danach, dass die auszulegenden Nahrungsmittel zusammengeführt werden, um sie an einen nachgeschalteten Behälter zu überführen. Die vorstehend beschriebene Schüttrutsche ist hierfür besonders gut geeignet, wenn sie die beschriebene Trichterform aufweist.

Ferner kann ein solcher Kochkessel von Vorteil sein, der über einen Deckel verfügt, mittels dessen die Öffnung des Gehäuses verschließbar ist. Dieses Verschließen erfolgt vorteilhafterweise zumindest in solcher Weise, dass ein unbeabsichtigter Eintritt oder Austritt von Nahrungsmitteln in den Innenraum hinein bzw. aus dem Innenraum heraus vermieden ist.

Um während eines Betriebs des Kochaggregats innerhalb des Kochkessels befindliche Nahrungsmittel bearbeiten zu können, kann es weiterhin von Vorteil sein, wenn die Rühreinrichtung des Kochkessels eine sich parallel zu der Mittelachse des Gehäuses erstreckende Rührwelle sowie eine Mehrzahl von sich radial bezogen auf die Rührwelle erstreckenden Rührelementen umfasst. Diese Rührelemente sind vorteilhafterweise äquidistant über eine Länge der Rührwelle verteilt angeordnet. Ein derartiger Kochkessel ist besonders gut dazu geeignet, die in dem Innenraum seines Gehäuses befindlichen Nahrungsmittel während deren Verarbeitung fortwährend umzuwirken und auf diese Weise insbesondere über den Mantel des Gehäuses in die Nahrungsmittel eingetragene thermische Energie abzuführen und zu verteilen. Eine Erwärmung der Nahrungsmittel kann auf diese Weise besonders effizient erfolgen. Vorteilhafterweise weist die Rühreinrichtung ferner Abstreifelemente auf, die vorzugsweise endseitig an den Rührelementen angeordnet sind. Diese Abstreifelemente sind dazu geeignet, fortwährend die innere Mantelfläche des Gehäuses "abzuschaben" und auf diese Weise ein Anhaften oder Anbrennen von Nahrungsmitteln an der Mantelfläche zu vermeiden.

Die zugrunde liegende Aufgabe wird ferner erfindungsgemäß mittels eines Kochaggregats mit den Merkmalen des Anspruchs 11 gelöst. Das Kochaggregat ist durch einen erfindungsgemäßen Kochkessel gekennzeichnet. Hierdurch ist es dazu in der Lage, die vorstehend beschriebenen Vorteile, die sich infolge der Verwendung eines solchen Kochkessels ergeben, ebenfalls zu verwirklichen. Insbesondere ist die Möglichkeit geschaffen, eine Automatisierung eines Betriebs des Kochaggregats zu steigern, wobei die Spüleinrichtung mittels der Steuerung des Kochaggregats angesteuert und auf diese Weise automatisch betrieben werden kann.

Schließlich wird die zugrunde liegende Aufgabe ferner mittels eines Verfahrens mit den Merkmalen des Anspruchs 12 gelöst. Dieses Verfahren ist dadurch gekennzeichnet, dass der Innenraum des Gehäuses zumindest teilweise, vorzugsweise vollständig, mittels der Spüleinrichtung gereinigt wird. Hierbei wird mittels mindestens einer Spüldüse der Spüleinrichtung, die zumindest teilweise, vorzugsweise vollständig, innerhalb des Innenraums des Gehäuses angeordnet ist, Spülwasser zumindest auf Teile der Rühreinrichtung sowie zumindest auf Teile der inneren Mantelfläche des Gehäuses aufgespritzt. Der Betrieb der Spüleinrichtung erfolgt erfindungsgemäß automatisch, wobei die Spüleinrichtung mittels einer Steuerung des Kochaggregats betrieben wird.

Die mittels Verwendung des erfindungsgemäßen Verfahrens erzielbaren Vorteile sind vorstehend bereits dargelegt. Insbesondere wird die Möglichkeit geschaffen, den Kochkessel automatisiert zu reinigen, sodass der Bedarf an Personal, das im Stand der Technik hierzu erforderlich ist, zumindest reduziert wird. Weiterhin wird ein Verbrauch von Frischwasser, das im Stand der Technik zweckentfremdet aus einer Frischwasserzufuhr für die Reinigung des Kochkessels zugeleitet wird, deutlich reduziert, da als Spülwasser verwendetes Frischwasser mittels der Spüleinrichtung effizienter einsetzbar ist.

### Ausführungsbeispiele

Die Erfindung ist nachstehend anhand eines Ausführungsbeispiels, das in den Figuren dargestellt ist, näher erläutert. Es zeigt:
- Fig. 1:: Eine perspektivische Ansicht eines erfindungsgemäßen Kochaggregats,
- Fig. 2:: Ein vertikaler Querschnitt durch einen erfindungsgemäßen Kochkessel,
- Fig. 3:: Ein vertikaler Längsschnitt durch den Kochkessel gemäß Figur 2 und
- Fig. 4:: Eine isolierte Darstellung einer Spüleinrichtung des Kochkessels gemäß Figur 2.

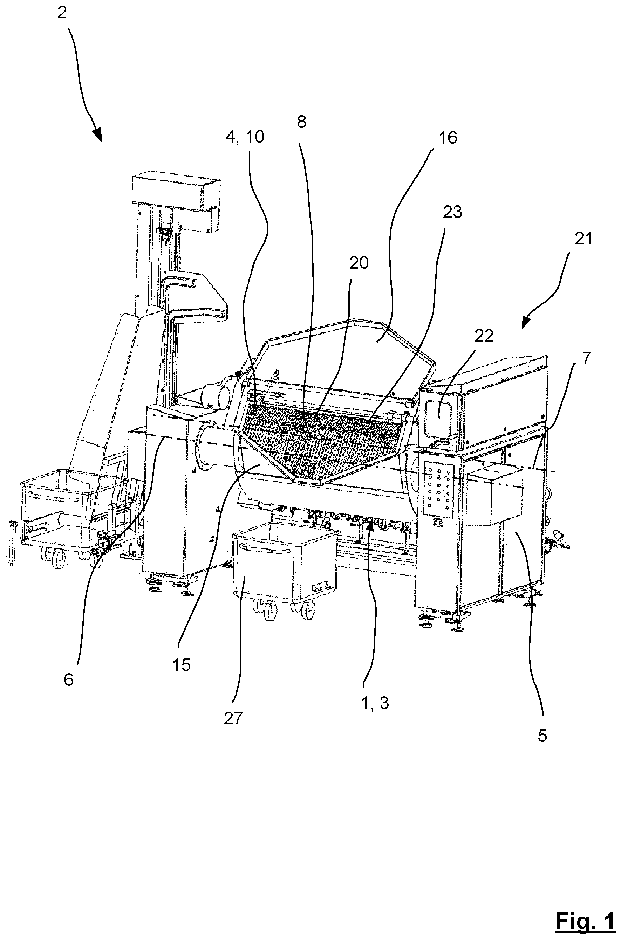

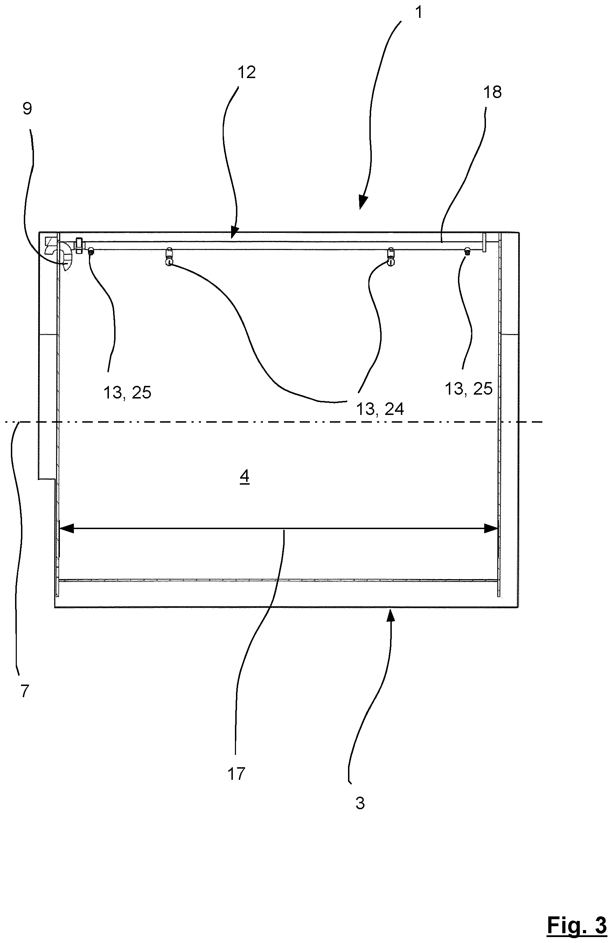

Ein Ausführungsbeispiel, das in den **Figuren 1 bis 4** gezeigt ist, betrifft ein erfindungsgemäßes Kochaggregat **2,** das mit einem erfindungsgemäßen Kochkessel **1** ausgestattet ist. Der Kochkessel **1** verfügt über ein Gehäuse **3,** das eine zylindrische Grundform aufweist. Eine Mittelachse **7** des Gehäuses **3** ist horizontal orientiert. Der Kochkessel **1** ist insgesamt um eine Schwenkachse **6** verschwenkbar, die parallel zu der Mittelachse **7** angeordnet ist. Um den Kochkessel **1** zu verschwenken, verfügt das Kochaggregat **2** über eine Antriebseinrichtung **5,** die insbesondere eine Hydraulikpumpe umfassen kann.

Das Gehäuse **3** des Kochkessels **1** weist eine Öffnung **10** auf, durch die hindurch Nahrungsmittel in einen Innenraum **4** des Gehäuses eingeladen bzw. verarbeitete Nahrungsmittel aus dem Innenraum **4** ausgeladen werden können. In dem gezeigten Beispiel erstreckt sich die Öffnung **10** über eine gesamte Länge **17** des Gehäuses **3.** Um die Öffnung **10** verschließen zu können, verfügt der Kochkessel **1** weiterhin über einen Deckel **16,** der verschwenkbar an dem Gehäuse **3** gelagert ist. Der Deckel **16** wirkt mit einer in den Figuren nicht dargestellten Antriebseinrichtung zusammen, mittels der er zwischen einer in **Figur 1** dargestellten Offenstellung, in der er einen Öffnungsquerschnitt der Öffnung **10** freigibt, und einer Schließstellung, in der er die Öffnung **10** verschließt, überführbar ist. Weiterhin weist der Kochkessel **1** in dem gezeigten Beispiel ein Schutzgitter **23** auf, das ebenfalls mit der Öffnung **10** zusammenwirkt. Das Schutzgitter **23** ist dazu vorgesehen, den Innenraum **4** des Kochkessels **1** während dessen Betrieb vor einem Zugriff von außen zu schützen und auf diese Weise Verletzungen eines Bedieners des Kochaggregats **2** zu vermeiden.

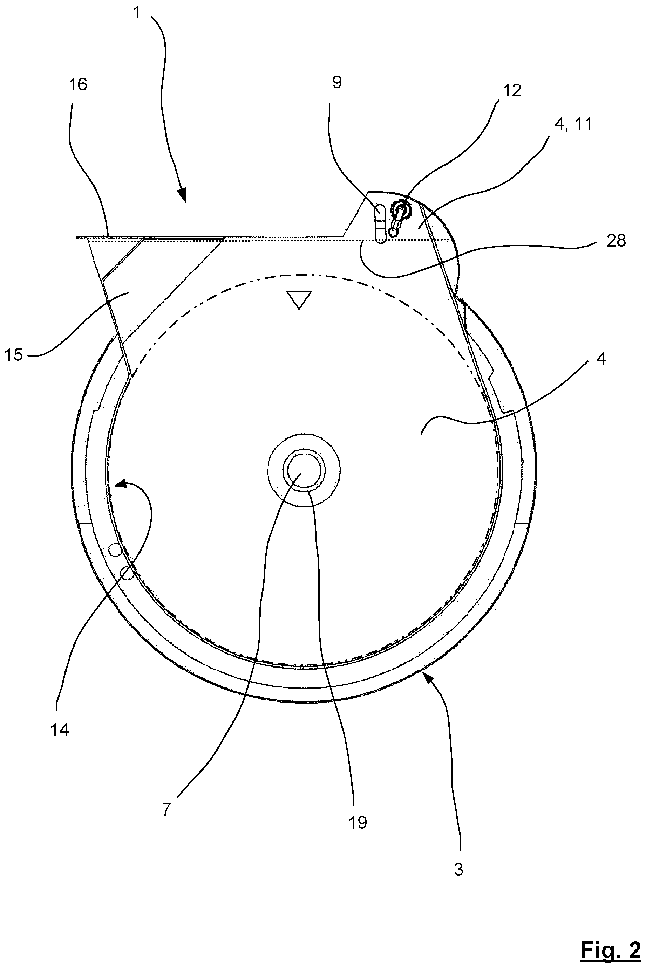

Die Überführung des Kochkessels **1** von der Arbeitsstellung, in der das Gehäuse **3** derart orientiert ist, dass die Öffnung **10** gewissermaßen einen oberen Abschluss des Gehäuses **3** bildet, in die Entladestellung erfolgt mittels des Verschwenkens des Kochkessels **1** um die Schwenkachse **6.** Bei Vorliegen in der Arbeitsstellung ist ein Öffnungsquerschnitt der Öffnung **10** vorzugsweise horizontal orientiert. Bei Vorliegen in der Entladestellung ist der Öffnungsquerschnitt der Öffnung **10** zumindest teilweise, vorzugsweise vollständig, unterhalb der Mittelachse **7** des Gehäuses **3** angeordnet. Die Arbeitsstellung des Kochkessels **1** ist beispielsweise anhand von **Figur 2** erkennbar ausgehend von dieser Arbeitsstellung kann der Kochkessel **1** bei dem gezeigten Beispiel um die Schwenkachse **6** um einen Winkel von maximal 120° verschwenkt werden.

Sofern in dem Innenraum **4** des Gehäuses **3** Nahrungsmittel vorhanden sind, werden diese mittels der Überführung des Kochkessels **1** in seine Ladestellung durch die Öffnung **10** aus dem Innenraum **4** entladen. In dem in **Figur 1** gezeigten Beispiel findet eine Übergabe der Nahrungsmittel an einen Rollcontainer **27** statt, dessen Breite die Länge **17** des Gehäuses **3** deutlich unterschreitet. Entsprechend ist es besonders von Vorteil, dass der Kochkessel **1** in dem gezeigten Beispiel eine Schüttrutsche **15** umfasst, die mit der Öffnung **10** zusammenwirkt. Die Schüttrutsche **15** ist dazu geeignet, die aus dem Innenraum **4** austretenden Nahrungsmittel trichterförmig zusammenzuführen und auf diese Weise gezielt und kontrolliert an den Rollcontainer **27** zu übergeben. Um bei Überführung des Kochkessels **1** in seine Entladestellung insbesondere Flüssigkeiten abzuleiten, kann ein in den Figuren nicht dargestelltes Vorstecksieb verwendet werden. Dieses kann anstelle des Schutzgitters **23** auf die Öffnung **10** gesteckt werden, sodass es den Öffnungsquerschnitt der Öffnung **10** überdeckt. Die Flüssigkeiten können durch das Vorstecksieb abfließen, während in dem Innenraum **4** die verarbeiteten Nahrungsmittel zurückbleiben.

Ein Betrieb des Kochaggregats **2** erfolgt mittels einer Steuerung **21,** die über ein Bedienfeld **22** bedienbar ist. Mittels der Steuerung **21** kann ein jeweiliger Verarbeitungsvorgang zumindest teilautomatisch gesteuert werden, sodass insbesondere durch eine das Kochaggregat **2** bedienende Person lediglich ein jeweiliges Verarbeitungsprogramm auszuwählen und der Kochkessel **1** zu beladen ist.

Um mittels des Kochaggregats **2** Nahrungsmittel verarbeiten zu können, umfasst das Kochaggregat **2** eine in den Figuren nicht dargestellten Heizeinrichtung, mittels der ein Mantel des Gehäuses **3** erwärmbar ist. Da die in das Gehäuse **3** eingeführten Nahrungsmittel in unmittelbaren Kontakt mit einer inneren Mantelfläche **14** des Gehäuses **3** stehen, wirkt diese Mantelfläche **14** als Übertragungsfläche für die mittels der Heizeinrichtung zur Verfügung gestellte thermische Energie. Auf diese Weise können die in dem Kochkessel **1** befindlichen Nahrungsmittel besonders einfach erhitzt, insbesondere gekocht oder gebraten, werden.

Innerhalb des Gehäuses **3** erstreckt sich eine Rühreinrichtung **8** des Kochkessels **1,** mittels der in dem Innenraum **4** befindliche Nahrungsmittel gerührt werden können. Die Rühreinrichtung **8** umfasst hier eine entlang der Mittelachse **7** des Kochkessels **1** verlaufende Rührwelle **19,** die mit einer Mehrzahl von Rührelementen **20** zusammenwirkt. Letztere erstrecken sich radial zu der Rührwelle **19** und sind äquidistant über eine Länge der Rührwelle **19** verteilt angeordnet. Die Rühreinrichtung **8** ist drehantreibbar, sodass die einzelnen Rührelemente **20** während eines Betriebs des Kochaggregats **2** in dem Innenraum **4** befindliche Nahrungsmittel fortwährend umwirken und umrühren können. In dem gezeigten Beispiel sind die einzelnen Rührelemente **20** an ihren der Rührwelle **19** abgewandten Enden jeweils mit einem Abstreifelement ausgestattet, wobei die Abstreifelemente in den Figuren nicht dargestellt sind. Diese Abstreifelemente stehen in einem reibenden Kontakt mit der inneren Mantelfläche **14** des Gehäuses **3,** wobei die Abstreifelemente dazu geeignet sind, die Mantelfläche **14** fortwährend abzureinigen. Hierdurch wird ein Anhaften oder Anbraten von Nahrungsmitteln an der Mantelfläche **14** vermieden.

Erfindungsgemäß weist das Gehäuse **3** einen Arbeitsraum **11** auf. Dieser Arbeitsraum **11** ist in solcher Weise ausgebildet, dass das Gehäuse **3** von seiner zylindrischen Grundform abweicht. Dies ergibt sich besonders gut anhand von **Figur 2****.** Ein Volumen des Arbeitsraums **11** ist Teil des Volumens des Innenraums **4,** sodass der Arbeitsraum **11** einen Teil des Innenraums **4** darstellt. Der Arbeitsraum **11** ist in einem oberen Endbereich des Gehäuses **3** angeordnet, wobei die Betrachtung als "oberen Endbereichs" auf die in **Figur 2** dargestellte Arbeitsstellung des Gehäuses **3** bezogen ist. Diese Anordnung des Arbeitsraums **11** führt dazu, dass er während eines Betriebs des Kochkessels **1** oberhalb eines maximalen Produktspiegels **28** von in dem Innenraum **4** befindlichen Nahrungsmitteln angeordnet ist. Der maximale Produktspiegel **28** geht dabei so weit, dass ein weiteres Befüllen zu einem Überlaufen des Kochkessels **1** führen würde. Entsprechend ist es besonders vorteilhaft, dass sich hier der Arbeitsraum **11** höhenmäßig bis über den Öffnungsquerschnitt der Öffnung **10** hinaus erstreckt, sodass während eines Betriebs des Kochaggregats **2** eine Belastung des Arbeitsraums **11** mit Teilen der zu verarbeitenden Nahrungsmittel weitestgehend ausgeschlossen ist. Der Arbeitsraum **11** erstreckt sich in dem gezeigten Beispiel über die gesamte Länge **17** des Gehäuses **3.**

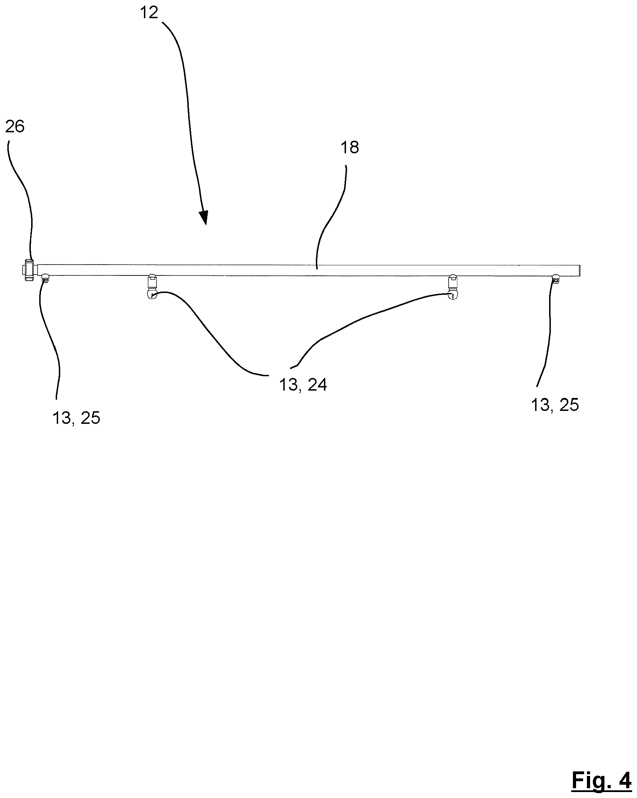

Der Kochkessel **1** verfügt weiterhin über eine Spüleinrichtung **12,** die in dem gezeigten Beispiel eine Spüllanze **18** sowie insgesamt vier Spüldüsen **13** umfasst. Die Spüleinrichtung **12** ergibt sich besonders gut anhand von **Figur 4****.** Die Spüllanze **18** ist mitsamt ihren Spüldüsen **13** innerhalb des Arbeitsraums **11** angeordnet. Sie ist langgestreckt ausgebildet und erstreckt sich über die gesamte Länge des Arbeitsraums **11.** In dem gezeigten Beispiel ist die Spüllanze **18** an einen das Gehäuse **3** des Kochkessels **1** stirnseitig durchdringenden Wasseranschluss angeschlossen, wobei die Spüllanze **18** mittels eines Befestigungsmittels **26** mit dem Wasseranschluss verbunden ist. Die Spüllanze **18** ist insgesamt demontierbar ausgestaltet. Die Spüldüsen **13** sind verteilt entlang der Spüllanze **18** angeordnet. In dem gezeigten Beispiel sind jeweils zwei Spüldüsen **13** als Rotationsdüsen **24** sowie die anderen beiden Spüldüsen **13** als Flachdüsen **25** ausgebildet. Die Flachdüsen **25** sind gegenüberliegend endseitig an der Spüllanze **18** angeordnet, während die Rotationsdüsen **24** in Richtung eines Mittelbereichs der Spüllanze **18** versetzt angeordnet sind. Die Spüldüsen **13** können beliebig gewechselt werden. Insbesondere ist es denkbar, dass verschiedene Spüllanzen **18** vorgehalten werden, die mit unterschiedlichen Spüldüsen **13** bestückt sind. Eine Veränderung der Konfiguration der Spüldüsen **13** ist dann besonders einfach mittels eines Wechsels der Spüllanze **18** gegen eine andere Spüllanze **18** möglich.

Zusätzlich zu der Spüleinrichtung **12** verfügt der Kochkessel **1** weiterhin über eine Frischwasserzufuhr **9,** die in dem gezeigten Beispiel in Längsrichtung des Kochkessels **1** betrachtet seitlich an einer seitlichen Stirnwand des Gehäuses **3** angeordnet ist. Über die Frischwasserzufuhr **9** ist dem Innenraum **4** insbesondere Prozesswasser zuleitbar, dass für die Verarbeitung jeweiliger Nahrungsmittel erforderlich ist. Hierbei kann es sich beispielsweise um Kochwasser handeln. Die Frischwasserzufuhr **9** ist ebenfalls dem Arbeitsraum **11** zugeordnet, sodass die Zuleitung von Prozesswasser in jedem Fall oberhalb des maximalen Produktspiegels **28** erfolgt.

Die Spüleinrichtung **12** ist dazu geeignet, die innere Mantelfläche **14** des Gehäuses **3** sowie die Rühreinrichtung **8** nach einem Entladen von in dem Kochkessel **1** befindlichen Nahrungsmitteln zu reinigen. Hierfür wird die Spüleinrichtung **12** mit Spülwasser beaufschlagt, wobei das Kochaggregat **2** beispielsweise über eine in den Figuren nicht dargestellte Druckerhöhungsanlage verfügen kann, mittels der das Spülwasser der Spüleinrichtung **12** mit einem gewissen Wasserdruck zuleitbar ist. Auch ist die Verwendung einer ebenfalls nicht dargestellten Mischeinrichtung denkbar, mittels der dem Spülwasser mindestens ein Additiv, beispielsweise ein Reinigungsmittel auf chemischer Basis, zumischbar ist, um die Reinigungswirkung des Spülwassers zu erhöhen.

Die Spüldüsen **13** sind jeweils dazu geeignet, einen gerichteten Spülwasserstrahl abzugeben, der sodann auf Teile der Rühreinrichtung **8** und/oder Teile der inneren Mantelfläche **14** des Gehäuses 3 trifft. Die als Rotationsdüsen **25** ausgebildeten Spüldüsen **13** weisen dabei die Funktionalität auf, dass der abgegebene Spülwasserstrahl fortwährend seine Richtung verändert, sodass über eine Betriebszeit des Spüleinrichtung **12** hinweg eine Vielzahl von Stellen der Rühreinrichtung **8** und der Mantelfläche **14** getroffen und entsprechend abgereinigt werden. Hierbei weisen die Spüldüsen **13** gegenüber der Frischwasserzufuhr **9** einen deutlich reduzierten Austrittsquerschnitt auf, sodass der Druck, mit dem das Spülwasser von den Spüldüsen **13** ausgeht, den Druck, mit dem Frischwasser aus der Frischwasserzufuhr **9** austritt, deutlich übersteigt. Das Eintragen von Wasser in den Innenraum **4** des Gehäuses **3** ist im Hinblick auf eine dadurch erzielte Reinigungswirkung demzufolge deutlich effizienter, wenn sie über die Spüleinrichtung **12** anstatt der Frischwasserzufuhr **9** erfolgt. Dies hat den technischen Effekt, dass unter Verwendung der Spüleinrichtung **12** gegenüber der Frischwasserzufuhr **9** zur Erzielung einer besseren Reinigungsleistung im Vergleich zum Stand der Technik ein geringerer Verbrauch von Wasser erforderlich ist. Hinzu kommt, dass ein zusätzlicher Wassereintrag, beispielsweise unter Verwendung eines Hochdruckreinigers, wie er im Stand der Technik üblich ist, ebenfalls entfallen kann.

In vorteilhafter Weise kann die Spüleinrichtung **12** verwendet werden, wenn sich das Gehäuse in seiner Entladestellung befindet. Bei Vorliegen in dieser Stellung kann das in den Innenraum **4** eingebrachte Spülwasser mitsamt abgelöster Partikel verbliebener Lebensmittelreste unmittelbar durch Wirkung der Schwerkraft durch die Öffnung **10** hindurch aus dem Kochkessel **1** ausgeleitet werden. Zusätzlich oder alternativ ist es denkbar, den Kochkessel **1** an einer bei Vorliegen des Gehäuses in seiner Arbeitsstellung tiefsten Stelle mit einem wechselweise schließ- und öffenbaren Auslauf auszustatten, der insbesondere im Zuge einer Reinigung mittels der Spüleinrichtung **12** geöffnet werden kann, sodass das Spülwasser durch den Ablauf aus dem Kochkessel **1** auslaufen kann.

In besonders vorteilhafter Weise ist das Kochaggregat **2** des gezeigten Beispiels derart ausgebildet, dass dessen Steuerung **21** über ein Reinigungsprogramm verfügt. Dieses ist über das Bedienfeld **22** auswählbar und aktivierbar. Das Reinigungsprogramm sieht vor, dass über die Spüleinrichtung **12** Spülwasser in den Innenraum **4** des Gehäuses **3** eingetragen wird, wobei in der vorstehend beschriebenen Weise mittels von den Spüldüsen **13** abgegebener Spülwasserstrahlen die gewünschte Reinigung erfolgt. Während das Reinigungsprogramm aktiviert ist, ist ein weiterer unmittelbarer Eingriff einer das Kochaggregat **2** bedienen Person nicht erforderlich.

### Bezugszeichenliste

- 1: Kochkessel
- 2: Kochaggregat
- 3: Gehäuse
- 4: Innenraum
- 5: Antriebseinrichtung
- 6: Schwenkachse
- 7: Mittelachse
- 8: Rühreinrichtung
- 9: Frischwasserzufuhr
- 10: Öffnung
- 11: Arbeitsraum
- 12: Spüleinrichtung
- 13: Spüldüse
- 14: Mantelfläche
- 15: Schüttrutsche
- 16: Deckel
- 17: Länge
- 18: Spüllanze
- 19: Rührwelle
- 20: Rührelement
- 21: Steuerung
- 22: Bedienfeld
- 23: Schutzgitter
- 24: Rotationsdüse
- 25: Flachdüse
- 26: Befestigungsmittel
- 27: Rollcontainer
- 28: Produktspiegel

## Patentansprüche

1. Kochkessel (1) für ein Kochaggregat (2) zur Verarbeitung von Nahrungsmitteln, umfassend
- ein eine zylindrische Grundform aufweisendes Gehäuse (3), das einen Innenraum (4) räumlich begrenzt,
- eine in dem Innenraum (4) des Gehäuses (3) angeordnete Rühreinrichtung (8), mittels der in dem Innenraum (4) befindliche Nahrungsmittel rührbar sind,
- eine Frischwasserzufuhr (9), mittels der Frischwasser in den Innenraum (4) einbringbar ist,
wobei eine Mittelachse (7) des Gehäuses (3) horizontal orientiert ist,
wobei das Gehäuse (3) mindestens eine Öffnung (10) aufweist, durch die hindurch Nahrungsmittel in den Innenraum (4) einladbar sowie aus dem Innenraum (4) ausladbar sind,
wobei das Gehäuse (3) zwischen einer Arbeitsstellung, in der ein Öffnungsquerschnitt der Öffnung (10) sich oberhalb der Mittelachse (7) befindet, und einer Entladestellung, in der der Öffnungsquerschnitt sich zumindest teilweise unterhalb der Mittelachse (7) befindet, verschwenkbar ist,
**dadurch gekennzeichnet, dass**
das Gehäuse (3) einen von seiner zylindrischen Grundform radial bezogen auf die Mittelachse (7) nach außen abweichenden, den Innenraum (4) des Gehäuses (3) erweiternden Arbeitsraum (11) aufweist,
wobei der Arbeitsraum (11) - bei Vorliegen des Gehäuses (3) in seiner Arbeitsstellung betrachtet - einem oberen Endbereich des Innenraums (4) zugeordnet ist,
wobei der Kochkessel (1) eine Spüleinrichtung (12) umfasst, die über mindestens eine zumindest teilweise innerhalb des Arbeitsraums (11) angeordnete Spüldüse (13) verfügt, mittels der Spülwasser zumindest auf Teile der Rühreinrichtung (8) sowie einer inneren Mantelfläche (14) des Gehäuses (3) aufspritzbar ist.

2. Kochkessel (1) nach Anspruch 1, **dadurch gekennzeichnet, dass** sich der Arbeitsraum (11) parallel zu der Mittelachse (7) des Gehäuses (3) erstreckt, vorzugsweise über eine gesamte Länge (17) des Gehäuses (3).

3. Kochkessel (1) nach Anspruch 2, **dadurch gekennzeichnet, dass** die Spüleinrichtung (12) eine langgestreckte Spüllanze (18) umfasst, die sich entlang des Arbeitsraums (11) erstreckt.

4. Kochkessel (1) nach einem der vorhergehenden Ansprüche, **dadurch gekennzeichnet, dass** die Spüleinrichtung (12) eine Mehrzahl von Spüldüsen (13) aufweist, wobei vorzugsweise die Spüldüsen (13) gleichmäßig über eine Länge (17) des Gehäuses (3) verteilt angeordnet sind.

5. Kochkessel (1) nach einem der vorhergehenden Ansprüche, **dadurch gekennzeichnet, dass** mindestens eine Spüldüse (13), vorzugsweise sämtliche Spüldüsen (13), von einer Rotationsdüse gebildet ist, mittels der ein Spülwasserstrahl in fortwährend wechselnde Richtungen spritzbar ist.

6. Kochkessel (1) nach einem der vorhergehenden Ansprüche, **gekennzeichnet durch** eine Druckerhöhungsanlage, mittels der das Spülwasser unter Druck setzbar ist.

7. Kochkessel (1) nach einem der vorhergehenden Ansprüche, **gekennzeichnet durch** eine Mischeinrichtung, mittels der dem Spülwasser mindestens ein Additiv zumischbar sind, insbesondere mindestens eine die Reinigung des Kochkessels (1) unterstützende Chemikalie.

8. Kochkessel (1) nach einem der vorhergehenden Ansprüche, **dadurch gekennzeichnet, dass** das Gehäuse (3) einen von der zylindrischen Grundform radial nach außen abweichenden, mit der Öffnung (10) zusammenwirkende Schüttrutsche (15) aufweist, mittels dessen Nahrungsmittel zumindest bei Vorliegen des Gehäuses (3) in seiner Entladestellung gerichtet aus dem Innenraum (4) ausbringbar sind.

9. Kochkessel (1) nach einem der vorhergehenden Ansprüche, **gekennzeichnet durch** einen Deckel (16), mittels dessen die Öffnung (10) derart verschließbar ist, dass ein unbeabsichtigter Eintritt oder Austritt von Nahrungsmitteln in den Innenraum (4) hinein bzw. aus dem Innenraum (4) heraus vermieden ist.

10. Kochkessel (1) nach einem der vorhergehenden Ansprüche, **dadurch gekennzeichnet, dass** die Rühreinrichtung (8) eine sich parallel zu der Mittelachse (7) des Gehäuses (3) erstreckende Rührwelle (19) sowie eine Mehrzahl sich radial bezogen auf die Rührwelle (19) erstreckende Rührelemente (20) umfasst, wobei vorzugsweise die Rührelemente (20) über eine Länge der Rührwelle (19) verteilt, vorzugsweise äquidistant verteilt, angeordnet sind.

11. Kochaggregat (2) zur Verarbeitung von Nahrungsmitteln, umfassend
- einen Kochkessel (1) nach einem der vorhergehenden Ansprüche,
- eine Antriebseinrichtung (5), mittels der der Kochkessel (1) um eine parallel zu einer Mittelachse (7) eines Gehäuses (3) des Kochkessels (1) orientierte, horizontale Schwenkachse (6) verschwenkbar ist,
- eine Steuerung (21) zum zumindest teilautomatisierten Betrieb des Kochkessels (1).

12. Verfahren zum Betrieb eines Kochaggregats (2) gemäß Anspruch 11, umfassend die folgenden Verfahrensschritte:
a) Einladen zu verarbeitender Nahrungsmittel in einen Innenraum (4) eines Gehäuses (3) eines Kochkessels (1) des Kochaggregats (2);
b) Verarbeiten der Nahrungsmittel unter Zuleitung einer vorbestimmten Menge von Frischwasser in den Innenraum (4) mittels einer Frischwasserzufuhr (9);
c) Ausladen der verarbeiteten Nahrungsmittel aus dem Innenraum (4) des Gehäuses (3), wobei der Kochkessel (1) mittels einer Antriebseinrichtung (5) des Kochaggregats (2) um eine horizontale Schwenkachse (6) verschwenkt wird, sodass sich eine Öffnung (11) des Gehäuses (3) zumindest teilweise unterhalb einer parallel zu der Schwenkachse (6) orientierten Mittelachse (7) des Gehäuses (3) befindet;
d) Reinigen des Innenraums (4) des Gehäuses (3) von Nahrungsmittelresten;
**dadurch gekennzeichnet, dass**
der Innenraum (4) zumindest teilweise mittels einer Spüleinrichtung (12) gereinigt wird,
wobei die Spüleinrichtung (12) mindestens eine innerhalb des Innenraums (4) angeordnete Spüldüse (13) umfasst, mittels der Spülwasser zumindest auf Teile einer Rühreinrichtung (8) sowie einer inneren Mantelfläche (14) des Gehäuses (3) aufgespritzt wird,
wobei die Spüleinrichtung (12) automatisch mittels einer Steuerung (21) des Kochaggregats (2) betrieben wird.

## Claims

1. A kettle (1) for a cooking unit (2) for preparing foods, comprising
- a housing (3) with a cylindrical basic shape, which spatially limits an interior space (4),
- a stirring device (8) arranged in the interior space (4) of the housing (3), with which the foods located in the interior space (4) can be stirred,
- a fresh water supply (9) by means of which fresh water can be introduced into the interior (4),
wherein a center axis (7) of the housing (3) is horizontally oriented,
wherein the housing (3) has at least one opening (10), through which foods can be loaded into the interior (4) and unloaded from the interior (4),
wherein the housing (3) can be swiveled between a working position, in which an opening cross section of the opening (10) is located above the center axis (7), and an unloading position, in which the opening cross section is located at least partially below the center axis (7),
**characterized in that**
the housing (3) has a work area (11) that outwardly deviates radially from its cylindrical basic shape relative to the center axis (7) and expands the interior (4) of the housing (3),
wherein the work area (11)-with the housing (3) viewed as being in its working position-is allocated to an upper end area of the interior (4),
wherein the kettle (1) comprises a rinsing device (12), which has at least one rinsing nozzle (13) arranged at least partially inside of the work area (11), by means of which rinsing water can be sprayed at least on parts of the stirring device (8) as well as an inner jacket surface (14) of the housing (3).

2. The kettle (1) according to claim 1, **characterized in that** the work area (11) extends parallel to the center axis (7) of the housing (3), preferably over an entire length (17) of the housing (3).

3. The kettle (1) according to claim 2, **characterized in that** the rinsing device (12) comprises an elongated rinsing lance (18), which extends along the work area (11).

4. The kettle (1) according to one of the preceding claims, **characterized in that** the rinsing device (12) has a plurality of rinsing nozzles (13), wherein the rinsing nozzles (13) are preferably arranged uniformly distributed over a length (17) of the housing (3).

5. The kettle (1) according to one of the preceding claims, **characterized in that** at least one rinsing nozzle (13), preferably all rinsing nozzles (13), consist of a rotary nozzle by means of which the rinsing water jet can be sprayed in constantly changing directions.

6. The kettle (1) according to one of the preceding claims, **characterized by** a pressure booster, by means of which the rinsing water can be pressurized.

7. The kettle (1) according to one of the preceding claims, **characterized by** a stirring device, by means of which at least one additive can be mixed in with the rinsing water, in particular a chemical that supports the cleaning of the kettle (1).

8. The kettle (1) according to one of the preceding claims, **characterized in that** the housing (3) has a chute (15) that radially outwardly deviates from the cylindrical basic shape and interacts with the opening (10), by means of which food can be removed in a directed manner from the interior (4), at least with the housing (3) in its unloading position.

9. The kettle (1) according to one of the preceding claims, **characterized by** a cover (16), by means of which the opening (10) can be closed in such a way as to prevent foods from inadvertently entering into the interior (4) or exiting out of the interior (4).

10. The kettle (1) according to one of the preceding claims, **characterized in that** the stirring device (8) comprises a stirring shaft (19) extending parallel to the center axis (7) of the housing (3) as well as a plurality of stirring elements (20) extending radially relative to the stirring shaft (19), wherein the stirring elements (20) are arranged distributed, preferably equidistantly distributed, over a length of the stirring shaft (19).

11. A cooking unit (2) for preparing foods, comprising
- a kettle (1) according to one of the preceding claims,
- a drive device (5) by means of which the kettle (1) can be swiveled around a horizontal pivot axis (6) oriented parallel to a center axis (7) of a housing (3) of the kettle (1),
- a controller (21) for the at least partially automated operation of the kettle (1).

12. A method for operating a cooking unit (2) according to claim 11, comprising the following procedural steps:
a) Loading foods to be processed into an interior (4) of a housing (3) of a kettle (1) of the cooking unit (2) ;
b) Processing the foods while supplying a predetermined quantity of fresh water into the interior (4) by means of a fresh water supply (9);
c) Unloading the processed foods from the interior (4) of the housing (3), wherein the kettle (1) is swiveled around a horizontal pivot axis (6) by means of a drive device (5) of the cooking unit (2), so that an opening (11) of the housing (3) is at least partially located below a center axis (7) of the housing (3) oriented parallel to the pivot axis (6);
d) Cleaning the interior (4) of the housing (3) to remove food residue;
**characterized in that**
the interior (4) is cleaned at least partially by a rinsing device (12),
wherein the rinsing device (12) comprises at least one rinsing nozzle (13) arranged inside of the interior (4), by means of which rinsing water is sprayed at least onto parts of a stirring device (8) as well as an inner jacket surface (14) of the housing (3),
wherein the rinsing device (12) is automatically operated by means of a controller (21) of the cooking unit (2).

## Revendications

1. Chaudron de cuisson (1) pour un ensemble de cuisson (2) pour le traitement de denrées alimentaires, comprenant :
- une enceinte (3) comportant une forme de base cylindrique, qui limite dans l'espace un compartiment intérieur (4),
- un dispositif de brassage (8) disposé dans le compartiment intérieur (4) de l'enceinte (3) au moyen duquel les denrées alimentaires se trouvant dans le compartiment intérieur (4) peuvent être brassées,
- une alimentation en eau douce (9) au moyen de laquelle de l'eau douce peut être introduite dans le compartiment intérieur (4),
sachant qu'un axe central (7) de l'enceinte (3) est orienté horizontalement,
sachant que l'enceinte (3) comporte au moins une ouverture (10), à travers laquelle des denrées alimentaires peuvent être chargées dans le compartiment intérieur (4) et déchargées du compartiment intérieur (4),
sachant que l'enceinte (3) peut être pivotée entre une position de travail, dans laquelle une section d'ouverture de l'ouverture (10) se trouve au-dessus de l'axe central (7) et une position de déchargement dans laquelle la section d'ouverture se trouve au moins en partie en dessous de l'axe central (7)
**caractérisé en ce que**
l'enceinte (3) comporte un espace de travail (11) s'écartant vers l'extérieur de sa forme de base cylindrique de façon radiale par rapport à l'axe central (7), élargissant le compartiment intérieur (4) de l'enceinte (3),
sachant que le compartiment de travail (11) est attribué à une zone d'extrémité supérieure de l'espace intérieur (4), en présence de l'enceinte (3) vue dans sa position de travail,
sachant que le chaudron de cuisson (1) comprend un dispositif de rinçage (12) qui dispose au moins d'au moins une buse de rinçage (13) disposée au moins en partie à l'intérieur du compartiment de travail (11) au moyen de laquelle de l'eau de rinçage peut être projetée au moins sur les parties du dispositif de brassage (8) ainsi que sur une surface d'enveloppe intérieure (14) de l'enceinte ((3).

2. Chaudron de cuisson (1) selon la revendication 1, **caractérisé en ce que** le compartiment de travail (11) s'étend parallèlement à l'axe central (7) de l'enceinte (3), de préférence sur une longueur totale (17) de l'enceinte (3).

3. Chaudron de cuisson (1) selon la revendication 2, **caractérisé en ce que** le dispositif de rinçage (12) comprend une lance de rinçage (18) allongée, qui s'étend le long du compartiment de travail (11).

4. Chaudron de cuisson (1) selon l'une quelconque des revendications précédentes, **caractérisé en ce que** le dispositif de rinçage (12) comporte une pluralité de buses der rinçage (13), sachant de préférence que les buses de rinçage (13) sont disposées réparties uniformément sur une longueur (17) de l'enceinte (3).

5. Chaudron de cuisson (1) selon l'une quelconque des revendications précédentes, **caractérisé en ce qu'**au moins une buse de rinçage (13), de préférence toutes les buses de rinçage (13), sont formées par une buse rotative, au moyen de laquelle un jet d'eau de rinçage peut être injecté dans des directions alternantes en continu.

6. Chaudron de cuisson (1) selon l'une quelconque des revendications précédentes, **caractérisé par** une installation d'augmentation de pression au moyen de laquelle l'eau de rinçage peut être mise en œuvre sous pression.

7. Chaudron de cuisson (1) selon l'une quelconque des revendications précédentes, **caractérisé par** un dispositif de mélange au moyen duquel au moins un additif peut être ajouté par mélange à l'eau de rinçage, en particulier au moins un produit chimique facilitant le nettoyage du chaudron de cuisson (1).

8. Chaudron de cuisson (1) selon l'une quelconque des revendications précédentes, **caractérisé en ce que** l'enceinte (3) comporte une goulotte de décharge (15) coopérant avec l'ouverture (10), s'écartant radialement vers l'extérieur de la forme de base cylindrique, au moyen de laquelle les denrées alimentaires peuvent être extraites du compartiment intérieur (4) au moins en présence de l'enceinte (3) orientée dans sa position de déchargement.

9. Chaudron de cuisson (1) selon l'une quelconque des revendications précédentes, **caractérisé par** un couvercle (16), au moyen duquel l'ouverture (10) peut être fermée de telle manière qu'une entrée ou une sortie involontaire des denrées alimentaires dans le compartiment intérieur (4) ou bien du compartiment intérieur (4) peuvent être évitées.

10. Chaudron de cuisson (1) selon l'une quelconque des revendications précédentes, **caractérisé en ce que** le dispositif de brassage (8) comprend un arbre de brassage (19) s'étendant parallèlement à l'axe central (7) de l'enceinte (3) et une pluralité d'éléments de brassage (20) s'étendant radialement par rapport à l'arbre de brassage (19), sachant de préférence que les éléments de brassage (20) sont disposés répartis sur une longueur de l'arbre de brassage (19) de préférence répartis de façon équidistante.

11. Ensemble de cuisson (2) pour le traitement de denrées alimentaires, comprenant :
- un chaudron de cuisson (1) selon l'une quelconque des revendications précédentes ,
- un dispositif d'entraînement (5) au moyen duquel le chaudron de cuisson (1) peut être pivoté autour d'un axe de pivotement horizontal (6), orienté parallèlement à un axe central (7) d'une enceinte (3) du chaudron de cuisson (1),
- une commande (21) pour le fonctionnement au moins partiellement automatisé du chaudron de cuisson (1).

12. Procédé de fonctionnement d'un ensemble de cuisson (2) selon la revendication 11, comprenant les étapes de procédé suivantes :
a) chargement de denrées alimentaires à traiter dans un compartiment intérieur (4) d'une enceinte (3) d'un chaudron de cuisson (1) de l'ensemble de cuisson (2),
b) traitement des denrées alimentaires en apportant une quantité prédéterminée d'eau douce dans le compartiment intérieur (4) au moyen d'une alimentation en eau douce (9),
c) déchargement des denrées alimentaires traitées du compartiment intérieur (4) de l'enceinte (3), sachant que le chaudron de cuisson (1) est pivoté autour d'un axe de pivotement horizontal (6) au moyen d'un dispositif d'entraînement (5) de l'ensemble de cuisson (2) de telle manière qu'une ouverture (11) de l'enceinte (3) se trouve au moins en partie en dessous d'un axe central (7) orienté parallèlement à l'axe de pivotement (6) de l'enceinte (3),
d) nettoyage du compartiment intérieur (4) de l'enceinte (3) des restes de denrées alimentaires,
**caractérisé en ce que**
le compartiment intérieur (4) est nettoyé au moins en partie au moyen d'un dispositif de rinçage (12),
sachant que le dispositif de rinçage (12) comprend au moins une buse de rinçage (13) disposée à l'intérieur du compartiment intérieur (4) au moyen de laquelle de l'eau de rinçage est projetée au moins sur les parties d'un dispositif de brassage (8) et une surface d'enveloppe intérieure (14) de l'enceinte (3),
sachant que le dispositif de rinçage (12) est activé automatiquement au moyen d'une commande (21) de l'ensemble de cuisson (2).
